(19) Europäisches Patentamt
European Patent Office
Office européen des brevets

(11) **EP 2 623 927 A1**

(12) # EUROPEAN PATENT APPLICATION

(43) Date of publication:
**07.08.2013 Bulletin 2013/32**

(51) Int Cl.:
*G01B 11/16* [(2006.01)]     *C09K 19/00* [(2006.01)]

(21) Application number: **12153722.9**

(22) Date of filing: **02.02.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **Stichting Dutch Polymer Institute**<br>**5612 AB  Eindhoven (NL)** | (72) Inventor: **The designation of the inventor has not yet been filed**<br><br>(74) Representative: **Renkema, Jaap**<br>**P.O. Box 593**<br>**6160 AN Geleen (NL)** |

(54) **Optical strain sensor**

(57)     The invention relates to use of an arrangement of a substrate and a liquid crystal layer provided on the substrate as an optical strain sensor, wherein the liquid crystal layer comprises liquid crystalline molecules having an ordered morphology and wherein the optical properties of the liquid crystal layer change by the strain of the substrate.

Figure 2(a)

**EP 2 623 927 A1**

**Description**

The present invention relates to an optical strain sensor based on liquid crystals.

Chiral-nematic or cholesteric polymers based on liquid crystals selectively reflect light within a certain bandwidth due to their periodic modulation of the refractive index. The color of the reflection is determined by the pitch of the cholesteric helix and thus a change in pitch will result in a change of the reflected color. This effect is well known for temperature sensitive liquid crystals and can be used as detection principle in a sensor. The change in the pitch can be caused by a wide range of inputs and thus cholesteric polymers are suitable for sensors.

Use of cholesteric liquid crystal for a sensor is known from WO2010/084010A1. WO2010/084010A1 discloses a multifunctional optical sensor comprising a substrate and a polymeric layer comprising polymerized liquid crystal monomers having an ordered morphology. The color, the reflectivity or the birefringence of the sensor changes due to a change of the morphology caused by physical contact with a chemical agent such as a gas or liquid, a change of temperature, or passage of time.

Finkelmann et al., Advanced Materials, 2001. 13(14): p.1069-1072 describes the possibility of lasing by cholesteric liquid single crystal elastomers (cholesteric LSCE). It was identified that a mechanical deformation of the cholesteric LSCE causes a shift of the reflection band and consequently a shift of the wavelength of the laser emission. A change in position of the reflection band with mechanical deformation was observed. However, it was found that a reasonable biaxial extension occurs only in the central region of the sample while in the other regions additional shear is imposed, which causes director reorientation. It was not possible to accurately measure the local strain.

While the known technology is satisfactory in some aspects, there is still a need in the art for an optical strain sensor with an improved accuracy.

The present invention provides use of an arrangement of a substrate and a liquid crystal layer provided on the substrate for an optical strain sensor, wherein the liquid crystal layer comprises liquid crystalline molecules having an ordered morphology and wherein the optical properties of the liquid crystal layer change by the strain of the substrate.

It was surprisingly found that the degree of the strain of the substrate substantially linearly translates to the shift in the peak transmission of the liquid crystal layer. This enables the arrangement according to the present invention to be used in an optical strain sensor.

The present invention relates to the use of the liquid crystal for an optical strain sensor. The sensor shows a first color, a first reflectivity and a first birefringence before a strain is induced to the substrate, and the sensor shows a second color, a second reflectivity or a second birefringence which differs from the first color, reflectivity or birefringence when a strain is induced to the substrate. This change of these optical characteristics can be observed with human eyes, or by optical detection methods, directly or indirectly for example by use of one or more linear or circular polarization filters.

The response to the strain is optical and therefore does not require any power source. When the changes in the optical characteristics are large enough, no measurement apparatus is needed. Moreover, since the active material of the sensor is a thin coating, the active material does not or hardly change the mechanical properties of the substrate.

The liquid crystalline molecules in the sensor according to the present invention have an ordered morphology which changes by the strain. Examples of ordered morphologies are cholesteric, planar, splay/bend, tilted, twisted and homeotropic alignment.

A preferred morphology is a cholesteric or planar morphology. For liquid crystalline materials, the average alignment of the liquid crystalline units is defined as the director of the liquid crystalline material. In a cholesteric morphology, the director rotates through the thickness of the film, with the axis of rotation being perpendicular to the substrate. The length over which the director rotates 360° is defined as the cholesteric pitch. For short pitches, the cholesteric liquid crystalline will reflect a portion of the light around central bandwidth $\lambda_o \equiv \bar{n}p$ where $\bar{n}$ is the average refractive index and $p$ is the pitch of the cholesteric. The width of the reflection band, $\Delta\lambda$, is determined by the birefringence ($\Delta n$) of the liquid crystalline:

$$\Delta\lambda = \lambda_o \frac{\Delta n}{\bar{n}}.$$

A cholesteric liquid crystalline will selectively reflect one (circular) polarization state of the incident light. If the reflection band of the cholesteric liquid crystalline material is in the visible region of the light, changes which occur within a cholesteric morphology can be viewed by the naked eye if the wavelength shift is large enough.

A change of the cholesteric pitch from $p_1$ to $p_2$, where $p_1 > p_2$. results in a blue-shift of the reflection band. This change is best visible when the cholesteric liquid crystalline structures are placed against a black background or against a scattering reflective background.

The sensor may have any length suitable for the specific application. Preferably, the sensor has a length of 5-15 cm in the sensing direction. This provides a good handling and a relatively uniform strain over the length of the sensor.

Preferably, the degree of the shift of the peak of the reflection band is substantially linear with respect to the degree of the strain. The degree of the shift of the peak is preferably substantially linear with respect to the degree of the strain for the strain of 0% to 2.5%, more preferably for the strain of 0% to 10%.

When the strain is small, e.g. up to 2.5%, the pitch recovery is often close to instant and close to complete.

When the strain is large, e.g. more than 2.5%, the pitch recovery may not be instant. After letting the sensor return to its initial length, the initial wavelength is recovered after some time, e.g. 30 min. The wavelength recovery is time dependent. The immediate shift of the reflection band is at most 2 nm per % of strain. Close to or almost instant pitch recovery and time dependent recovery are each suitable for different applications.

Preferably, the peak of the reflection band of the liquid crystal layer shifts to a lower wavelength by at least 1 nm per % of strain. More preferably, the color shift is at least 1.5 nm, more preferably at least 2 nm, even more preferably at least 2.5 nm, per % of strain increase. A larger color shift per % of strain is more detectable and advantageous for a use as a sensor.

In some embodiments, the peak of the reflection band of the liquid crystal layer is at 390-750 nm before strain, i.e. in the visible range. The peak in the visible range is advantageous in that the strain is visible to the human eyes. In some other embodiments, the peak of the reflection band of the liquid crystal layer is at 750-1400 nm before strain, i.e. in the near infrared range.

The thickness of the liquid crystal layer is typically 1 to 20 $\mu$m, preferably 4 to 8 $\mu$m.

The substrate may preferably be a uniaxially drawn polymer fiber or a uniaxially drawn polymer film. A uniaxially drawn polymer fiber or film is essentially made of polymer molecules oriented in the drawing direction. Thus, the oriented molecules of the polymer fiber or film give the ordered morphology of the liquid crystalline molecules provided thereon. The polymer fiber or a film may be made of any known polymer suitable for making a fiber or a film by uniaxial drawing, such as polyolefin (e.g. polyethylene, polypropylene), polytetrafluoroethylene, polyester, polyether, polyamide (e.g. aramid), polyvinylalcohol, polyacrylonitril, polycarbonate and liquid crystal polymer (e.g. poly (p-phenylene-2, 6-benzobisoxazole). Specific example of the polymer suitable for making a fiber or a film by uniaxial drawing includes ultrahigh molecular weight polyethylene, such as the ultrahigh molecular weight polyethylene used for Dyneema ® fiber.

A uniaxially drawn polymer fiber is herein understood to mean an elongated body in which the length dimension along the drawing direction is much greater than its cross section dimension, e.g. the length dimension is at least 10 times larger than the diameter. The cross section may e.g. be substantially circular, elliptical, star-shaped, triangular shaped, etc. The diameter is herein meant the largest dimension of the cross section.

The uniaxially drawn polymer fiber may typically have a diameter of 10-500 $\mu$m. The diameter of the uniaxially drawn polymer fiber may be chosen depending on the application and the type of fibers. In some embodiments, the diameter of the uniaxially drawn polymer fiber may be 20-300 $\mu$m or 50-250 $\mu$m. In other embodiments, the diameter of the uniaxially drawn polymer fiber may be smaller, such as 10-50 $\mu$m or 15-20 $\mu$m.

For example, the uniaxially drawn polymer fiber may be ultrahigh molecular weight polyethylene fiber such as Dyneema ® fiber having a diameter of 15- 20 $\mu$m.

A uniaxially drawn polymer film is herein understood to mean a thin body having a cross section with a smaller dimension (thickness) and a larger dimension (width) and in which the length dimension along the drawing direction is much greater than the thickness, e.g. the length dimension along the drawing direction is at least 10 times greater than the smallest dimension of the cross section dimension perpendicular to the drawing direction. The smallest dimension of the cross section dimension is called thickness. The cross section may e.g. be rectangular. A film having a small width may also be referred as a tape.

Preferably, the uniaxially drawn polymer film has a thickness of 10-500 $\mu$m, preferably 15-300 $\mu$m, more preferably 20-100 $\mu$m.

In a particularly preferred embodiment, the substrate is a uniaxially drawn polymer film having a thickness of 20-100 $\mu$m and a width of 1-10 mm.

Alternatively, the substrate may comprise an alignment layer for inducing the ordered morphology and a base layer which does not have a function of inducing ordered morphology of the liquid crystal molecules applied thereon.

A layer of a substrate material may first be provided, which does not have a function of inducing ordered morphology of the liquid crystal molecules applied thereon. The surface of this layer may be modified into an alignment layer for inducing the ordered morphology or an additional alignment layer for inducing the ordered morphology may be provided to the surface of this layer as a separate layer.

The surface of the substrate material layer may be treated such that its surface becomes an alignment layer and the rest becomes the base layer. For example such treatment can be direct buffing or rubbing of the substrate material. In case the substrate material is cellulose triacetate, buffing will induce an in-plane alignment of liquid crystalline monomers at the substrate interface.

In other embodiments, a separate layer may be provided to the substrate material layer, in which case the added layer becomes the alignment layer and the substrate material layer becomes the base layer. This alignment layer is applied to the substrate material layer (=base layer) and then treated to induce the desired molecular ordering. An example of such order inducing layer is a polyimide layer. The polyimide can be applied to the base layer by coating from solution and consequently crosslinked at elevated temperatures. As a final step, the polyimide layer is buffed to induce the desired alignment. A second example of such order inducing layer is a photo-alignment layer. In this case, an exposure to (linearly polarized) light is performed to induce the desired alignment. A third alternative for such order inducing layer is to use alignment materials which induce a homeotropic alignment and buffing (rubbing) or exposure to polarized light is completely omitted. Other examples of the materials for the alignment layers are polyamide, polyvinyl alcohol and silicon oxide. A rather wide range of coatings can also be applied which provide the desired alignment in the liquid crystal.

Examples of the suitable material for the base layer include, but are not limited to, glass, transparent ceramic, fused silica, transparent polymers which may be thermosetting or thermoplastic and (semi)-crystalline or amorphous, such as PC (polycarbonate), PMMA (polymethylmethacrylate), PET (polyethylene terephthalate), PVC (polyvinylchloride), PS (polystyrene), (polycarbonate), COC (cyclic olefin copolymers), PET (polyethylene terephthalate), PES (polyether sulphone), polyamide such as aramid, liquid crystal polymer such as poly (p-phenylene-2, 6-benzobisoxazole) and also crosslinked acrylates and epoxies.

According to another aspect of the invention, an optical strain sensor is provided comprising an arrangement of a substrate and a liquid crystal layer provided on the substrate, wherein the liquid crystal layer comprises liquid crystalline molecules having an ordered morphology and wherein the optical properties of the liquid crystal layer change by the strain of the substrate.

The optical strain sensor according to the present invention further comprises an element which allows the arrangement of the substrate and the liquid crystal layer to be used for a sensor.

For example, the optical strain sensor according to the present invention comprises an attachment element for attaching to an external object which applies stress to the arrangement of the substrate and the liquid crystal layer (hereinafter sometimes referred to as a sensing arrangement). The attachment element may e.g. comprise a clamping means provided at each end of the sensing arrangement. The two clamping means are attached to two different positions and the distance between the positions can be detected by the changes in the optical properties of the sensing arrangement. A further example of the attachment element is an adhesive layer applied on the side of the substrate opposite of the liquid crystal layer. The adhesive layer is adhered to an object and the changes in the size of the object can be detected by the changes in the optical properties of the sensor. Numerous other alternatives for the attachment element are apparent to the skilled person and are not described here in detail.

According to a further aspect of the present invention, a process for making an optical strain sensor is provided. The process comprises the steps of I) providing an arrangement of a substrate and a liquid crystal layer provided on the substrate, wherein the liquid crystal layer comprises liquid crystalline molecules having an ordered morphology and wherein the optical properties of the liquid crystal layer change by the strain of the substrate and II) arranging the arrangement of step I) into the optical strain sensor, wherein step I) comprises:

A) providing a substrate onto which a solution of a polymerizable liquid crystal composition is applied and

B) curing the polymerizable liquid crystal composition,

wherein step A) involves

A1) providing the substrate and coating the solution onto the substrate or

A2) co-extrusion of the substrate and the solution.

The substrate induces the ordered morphology to the liquid crystalline molecules applied thereon.

Step II) is the step of adapting the sensing arrangement to be used for a sensor by e.g. adding an extra element to the sensing arrangement. For example, this may be done by providing an attachment element to the sensing arrangement, wherein the attachment element is for attaching to an external object which potentially applies stress to the sensing arrangement.

According to the process of the present invention, step A) may be carried out either in one step (A2) or in more than one step (A1). The substrate and the solution applied thereon may be simultaneously provided by co-extruding the material for forming the substrate and the solution of the polymerizable liquid crystal composition. Alternatively, the substrate may first be provided and subsequently the solution of the polymerizable liquid crystal composition may be coated thereon. The coating may be done by any known coating method, e.g. spray coating, dip coating, slit die coating, printing, brush coating, spin coating, roll coating, bar coating or curtain coating. Spray coating and dip coating are especially preferred. In the A1) case, the substrate may in itself be provided in one step or more than one step. For example, a substrate which induces the ordered morphology to the liquid crystalline molecules applied thereon may be formed in one step by extrusion and stretching. Alternatively, a layer of a substrate material may first be provided and its surface may subsequently be treated to have an alignment layer for inducing the ordered morphology.

According to the process of the present invention, the cured coating is in situ formed on the surface of the substrate. With a simple method, a homogeneous adhesion of the coating to the substrate is obtained. Moreover, the in situ formation of the liquid crystal coating allows a good control of the alignment of the liquid crystal in the final product. This results in a coating in which the reflection spectrum is well controlled. The reflection spectrum may be adjusted so that ultra-violet light, visible light and/or infrared light is reflected. This allows an extremely wide variety of optical properties of the coating.

According to one aspect of the present invention, the substrate is a uniaxially drawn polymer fiber. Accordingly, the present invention provides a process for making an optical strain sensor comprising the steps of:

A) providing the polymer fiber onto which a solution of a polymerizable liquid crystal composition is applied and

B) curing the polymerizable liquid crystal composition,

wherein step A) involves

A1) providing the polymer fiber and coating the solution onto the polymer fiber or

A2) co-extrusion of the polymer fiber and the solution.

An optical strain sensor is obtained by the process of the present invention in an easy manner. The simple application of the coating of liquid crystal by coating or simple co-extrusion results in an optical strain sensor in the shape of a fiber.

Furthermore, the oriented molecules of the polymer fiber give ordered morphology to the liquid crystal applied thereon. This makes the process simpler since a separate step of providing a layer for giving ordered morphology becomes unnecessary. Also, the oriented fiber can act as a retardation layer (for instance a halve wave plate) which can enhance the reflection of the fiber.

Polymer fibers with oriented molecules are obtained by stretching of the fibers during their preparation as well-known in the art, such as by wet spinning, dry spinning, melt-spinning process, gel-spinning process etc. As is known in the art, the degree of orientation of the molecules may be adjusted e.g. by the draw ratio.

The application of the solution of the poymerizable liquid crystal composition onto the polymer fibers may be carried out by any known coating method as mentioned above. However, spray coating or dip coating is preferred. In particular, spray coating is preferred. Spraying of the solution was found to be extremely beneficial in that it resulted in a very homogeneous application of the coating. With spray coating, the amount of the composition to be applied on the fiber can be controlled to avoid an excess amount of the polymerizable liquid crystal composition to remain on the surface of the fiber. When excess amount of the composition remains unevenly on the surface of the fiber. This gives the final fiber unattractive visual effects. Furthermore, the process according to the present invention is very efficient for making a large number of coated fibers at the same time.

In the process of the present invention, spraying of the solution can be carried out with known methods. Any suitable gas carrier may be used for the airbrush, e.g. air or nitrogen. The pressure for the spray may be chosen according to the conditions of the solution and the desired application. The spraying step may be repeated as many times as necessary, but typically 2-10 times.

The substrate may also be a uniaxially drawn polymer film. In this case, the present invention provides a process for making an optical strain sensor, comprising the steps of:

A) providing the polymer film onto which a solution of a polymerizable liquid crystal composition is applied and

B) curing the polymerizable liquid crystal composition,

wherein step A) involves

A1) providing the polymer film and coating the solution onto the polymer fiber or

A2) co-extrusion of the polymer film and the solution.

Alternatively, the substrate may comprise an alignment layer for inducing the ordered morphology and a base layer. In this case, the present invention provides a process for making an optical strain sensor, comprising the steps of:

A) providing an alignment layer at the surface of the base layer and coating the solution onto the alignment layer and

B) curing the polymerizable liquid crystal composition.

The liquid crystalline molecules may comprise liquid crystalline monomers and/or liquid crystalline polymers.

The polymerizable liquid-crystalline composition preferably comprises a polymerizable compound having a mesogenic group and a chiral dopant. The polymerizable compound having a mesogenic group may herein sometimes be referred as a polymerizable mesogenic compound. The chiral dopant may be either reactive or non-reactive. The composition may further comprise a non-polymerizable compound having a mesogenic group, which may herein sometimes be referred as a non-polymerizable mesogenic compound. The composition may further comprise a polymerizable compound that does not have a mesogenic group, which may herein sometimes be referred as a polymerizable non-mesogenic compound.

It will be appreciated that the liquid crystalline composition may comprise more than one type of the polymerizable mesogenic compound or other components.

The curing of the polymerizable liquid crystal composition may be carried out by any known methods, but UV curing is preferred. Thus, in preferred embodiments of the present invention, the polymerizable liquid crystal composition further comprises a UV initiator.

In the context of this invention, mesogenic groups refer to those chemical groups which can give rise to liquid-crystalline properties in a molecule. Chemical compounds which contain mesogenic groups usually have a calamitic or discotic configuration. Rather than them having to have a liquid-crystalline phase themselves, it is sufficient when they contribute to a liquid-crystalline phase in a mixture with other mesogenic compounds. In principle, any mesogenic groups, for example, all mesogenic groups known in the literature, are suitable.

Herein the terms "mesogen" and "liquid crystal" are used to indicate materials or compounds comprising one or more mesogenic groups, such as (semi)rigid rod-shaped, banana-shaped, board shaped or disk-shaped mesogenic groups, i.e. groups with the ability to induce liquid crystal phase behavior. Liquid crystal compounds with rod-shaped or board-shaped groups are also known in the art as "calamitic" liquid crystals. Liquid crystal compounds with a disk-shaped group are also known in the art as "discotic" liquid crystals. Compounds or materials comprising mesogenic groups do not necessarily have to exhibit a liquid crystal phase themselves. It is also possible that they show liquid crystal phase behavior only in mixtures with other compounds, or when the mesogenic compounds or materials, or the mixtures thereof, are polymerized. For example, a regularly updated collection of known mesogenic groups is published by V. Vill et al. as a database under the name LiqCryst (obtainable from LCI Publisher GmbH, Eichenstr. 3, D-20259 Hamburg). Preference is given to using those mesogenic groups which are readily accessible synthetically on an industrial scale and which result in compounds which have sufficient stability for use as a polymer film over a long period. Examples of mesogens suitable for use in the present invention include smectic, nematic, chiral nematic and ferro-electric mesogens.

The mesogen can be a reactive mesogen or a non-reactive mesogen. Examples of suitable non-reactive mesogens include for example such mesogens as available from Merck, for example as described in their product folder Licristal(R) Liquid Crystal Mixtures for Electro-Optic Displays (May 2002) whose contents are herein incorporated by reference regarding non-reactive mesogens. Examples include for example halogenated mesogens, such as for example TL205 (Merck, Darmstadt) or cyanobiphenyls, such as for example E7 (Merck, Darmstadt). In addition, mixtures of two or more non-reactive mesogens can be used. Also, mixtures of non-reactive and reactive mesogens can be used.

Examples of suitable reactive mesogens include, for example, mesogens comprising acrylate, methacrylate, epoxy, oxethane, vinyl-ether, styrene and thiol-ene groups. Suitable examples are for example described in WO04/025337 whose contents is herein incorporated by reference regarding reactive mesogens, referred in WO04/025337 as polymerizable mesogenic compounds and polymerizable liquid crystal materials. Examples include C3M, RMM34 (Merck). In addition, mixtures of two or more reactive mesogens can be used (Merck Reactive Mesogens, Brighter clearer communication).

Further, the liquid crystal composition may also comprise suitable surfactants to decrease the surface energy at the mesogen-air interface or between the composition and the alignment layer.

The liquid crystal composition may further comprise dichroic or non-dichroic absorbing, fluorescent, electro-luminescent dyes, and nano-/micro-particles with anisotropic shape and/or spectral properties to add additional functionality to the polarization grating.

In order to form a solid film , the liquid crystal composition may further comprise a polymerizable compound, which may be polymerized to lock the orientation of the mesogens. The polymerizable compound may be constituted by polymerizable mesogens, but could also be a separate, polymerizable non-mesogenic compound.

A liquid crystal composition comprising reactive mesogens may also comprise a polymerization initiator, such as a free radical initiator or a cationic agent, which may be photosensitive or thermally sensitive, i.e. the initiator is activated by light and heat, respectively. Mixtures of one or more polymerization initiators may be used.

Suitable chiral dopants are described e.g. in US7771801, and the chiral dopants listed in US7771801 are incorporated herein by reference. For example, suitable reactive chiral compounds include the polymerizable chiral material Paliocolor(R) LC756 (from BASF AG, Ludwigshafen, Germany). Suitable non-reactive chiral dopants include standard chiral dopants like R- or S-811 , R- or S-1011 , R- or S-2011 , R- or S-3011, R- or S-4011 , R- or S-5011 , or CB 15 (all available from Merck KGaA, Darmstadt, Germany), sorbitols as described in WO 98/00428, hydrobenzoins as described in GB 2,328,207, chiral binaphthols as described in WO 02/94805, chiral binaphthol acetals as described in WO 02/34739, chiral TADDOLs as described in WO 02/06265, or chiral compounds having fluorinated linkage groups as described in WO 02/06196 or WO 02/06195. The (weight) ratio of the chiral dopant in the total composition may be chosen by the skilled person.

In embodiments of the present invention, the liquid crystal composition may comprise additional functional compounds, such as different type of dyes and particles having isotropic or anisotropic shape and/or spectral properties. Such compounds may be oriented in the composition by the mesogens, and thus confer additional, for example optical, properties to the polarization grating.

To improve the wetting of the substrate or the alignment of the mesogens on the surface, the polymerizable composition, as shown in EP 0 617 111 A1, may contain surface-active substances in small weight fractions as additives, as known, for example, from coatings production for improvement of leveling. Particularly suitable surface-active substances are organosiloxanes which are used as coating assistants. The organosiloxanes, as oligomers, may also themselves have mesogenic properties. The adhesion of the film to the substrate may, depending on the properties of the substrate surface, be improved by suitable adhesion promoters in the polymerizable mixture, which likewise are known from the prior art. An improvement in the adhesion of the polymer film to the substrate may also be achieved by suitable pretreatment of the substrate, for example by a corona discharge treatment or a plasma treatment. When the additives themselves have no mesogenic properties, they are added in such small amounts that they do not impair the formation of the liquid-crystalline phase.

On completion of alignment, the polymerizable composition is exposed to the action of actinic radiation at a preferably constant temperature and thus partly polymerized or copolymerized. Actinic radiation is photochemically active radiation, for example UV radiation, X-ray radiation, gamma radiation, or irradiation with high-energy particles, for example electrons or ions. Preference is given to using UV-A radiation.

The width of the reflection band of the coating may be adjusted by the incident illumination energy and also its distribution with time of the UV-A radiation. The necessary illumination energy depends upon the type of radiation used, upon the material used, upon the photoinitiator, and upon the layer thickness. The preferred illumination energies per unit area for UV-A radiation are in the range from 1 to 1000 mJ/cm$^2$,more preferably in the range from 10 to 500 mJ/cm$^2$. The duration of the illumination is preferably shorter than 30 s, more preferably shorter than 10 s. The irradiation may be done in one step or two steps. It might also be advantagous to perform the irradiation in a suitable atmosphere. For instance, in the case of a radical polymerization an inert atmosphere such as nitrogen might be beneficial.

The solution of the polymerizable liquid crystal composition may be based on any suitable solvent known to the skilled person.

Fig. 1 shows a graph of stress versus strain of the arrangement of the substrate and the liquid crystal layer according to the present invention;
Fig. 2(a) shows a graph of peak reflection versus strain of the arrangement of the substrate and the liquid crystal layer according to the present invention; and
Fig. 2(b) shows a graph of peak transmission versus strain of the arrangement of the substrate and the liquid crystal layer according to the present invention;

The invention is hereinafter illustrated by means of following non-limiting examples.

Example 1

A nylon 6 film was coated on one side with a liquid crystal coating.

(1) Polymer fiber

A uniaxially oriented nylon 6 film was provided with polymer chains aligned along its length. The tape had a thickness of 25 $\mu$m, a width of 5 mm and a length of 100 mm.

(2) Polymerizable liquid crystal solution

Polymerizable mesogenic compounds RM82 and RM 257 (supplied by Merck) were mixed in a weight ratio of 1:4 and was dissolved in xylene. Further a chiral dopant LC756 (supplied by BASF) was added to the solution at an amount of 5.2 wt% (The amount of chiral dopant is with respect to the total solid content (sum of polymerizable mesogenic compound, the chiral compound and the photoinitiator)). A photoinitiator lrgacure 184 was subsequently added at a loading of 1 wt% with respect to the total solid content. The weight ratio between the solid to the solvent was 1:8. The solution was mixed at 80 °C in order to get the isotropic phase and get a homogeneous solution.

(3) Application of the liquid crystal coating

The polymerizable liquid crystal solution obtained in step (2) was applied to the film of step (1) by spraying with an airbrush, using air as the gas carrier and at a pressure of 35 psi. The spraying was repeated 5 to 10 times. The solvent was subsequently evaporated under an ambient condition.

After evaporation of the solvent the as coated film was placed in nitrogen atmosphere under a UV lamp (total dose 2.85 J/cm$^2$) for curing for 100 seconds. Subsequently a post curing step was carried out at 80 degrees under nitrogen for 15 minutes to fully polymerize the reactive species.

A film coated on one side with a coating of 4 to 8 $\mu$m was obtained. The coating had a green color due to light reflection when viewed in daylight.

(4) Measurements

The coated film was placed in a specifically designed frame that enables to impose uniaxial extension of the film and keep it fixed until the film is released. Once the desired extension is imposed the frame is placed in the UV-Vis spectrometer for measurement.

The strain $\varepsilon$ (%) is calculated from equation 1:

$$\varepsilon = \frac{L - l_0}{l_0} \qquad (1)$$

With $l_0$ the initial length of the film and L the length of the film after extension.

A UV-Vis spectrometer was used to characterize the cholesteric liquid crystal layer on the film. For each value of extension, a plot of the transmitted light as a function of the wavelength of the incident light is obtained. From these spectrums the wavelength corresponding to the minimal transmission value was extracted and then plotted as a function of strain.

Experiment 1: stress-strain relationship

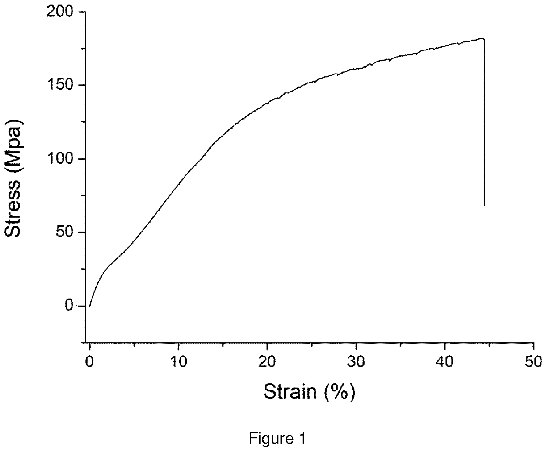

The stress versus strain is plotted in the graph of Figure 1.

Experiment 2: transmission measurement

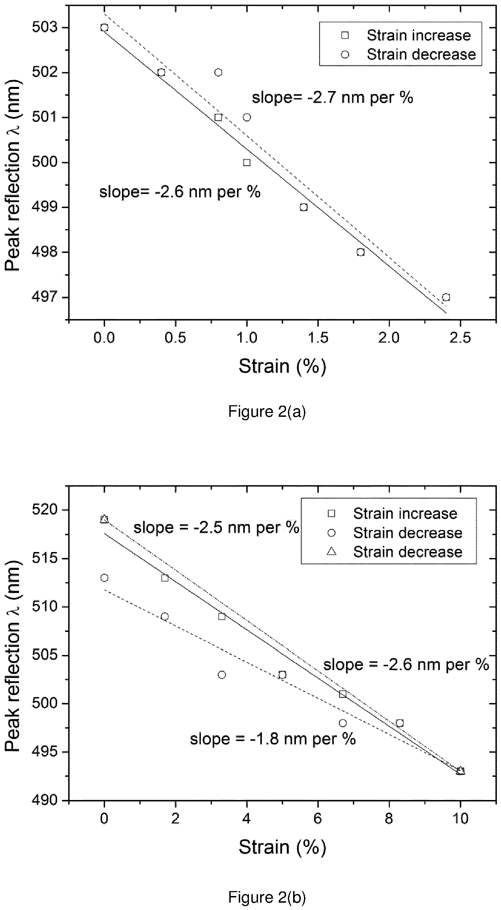

The film was extended up to 2.5mm extension (2.5% extension). The transmission measurement was done at various strain levels between 0% and 2.5%. The peak reflection value was plotted against the strain in Figure 2(a) and indicated by square dots and a solid line. It can be seen that the shift of -2.6 nm per % of strain was obtained.

After the measurement was done for the film which was extended by 2.5 mm, the extension was decreased to various degrees at which the transmission measurement was done. Finally the transmission measurement was done for the initial length. The peak reflection value was plotted against the strain in Figure 2(a) and indicated by circle dots and a dashed line. It can be seen that the shift of -2.7 nm per % of strain was obtained.

Experiment 3: transmission measurement

The film was extended up to 10mm extension (10% extension). The transmission measurement was done at various strain levels between 0% and 10%. The peak reflection value was plotted against the strain in Figure 2(b) and indicated by square dots and a solid line. It can be seen that the shift of -2.5 nm per % of strain was obtained.

After the measurement was done for the film which was extended by 10 mm, the extension was decreased to various degrees and the transmission measurement was done. Finally the transmission measurement was done for the initial length. The transmission value was plotted against the strain in Figure 2(b) and indicated by circle dots and a dashed line. It can be seen that the shift of -1.8 nm per % of strain was obtained.

Additionally, the transmission of the film 30 minutes after the initial length was obtained was measured and plotted in Figure 2(b) indicated by a triangle dot and a dot dash line.

It can be seen that the shift of -2.6 nm per % of strain was obtained.

The experiments show that the coated tape can be used as an accurate optical strain sensor.

**Claims**

1.  Use of an arrangement of a substrate and a liquid crystal layer provided on the substrate as an optical strain sensor, wherein the liquid crystal layer comprises liquid crystalline molecules having an ordered morphology and wherein the optical properties of the liquid crystal layer change by the strain of the substrate.

2.  The use according to claim 1, wherein the peak of the reflection band of the liquid crystal layer shifts lower by at least 1 nm by 1% of strain.

3.  The use according to claim 1 or 2, wherein the peak of the reflection band of the liquid crystal layer is at 390-750 nm before strain.

4.  The use according to claim 1 or 2, wherein the peak of the reflection band of the liquid crystal layer is at 750-1400 nm before strain.

5.  The use according to any one of claims 1-4, wherein the liquid crystal layer has a thickness of 1-20 $\mu$m.

6.  The use according to any one claims 1-5, wherein the substrate is a uniaxially drawn polymer fiber or a uniaxially drawn polymer film.

7.  The use according to claim 6, wherein the polymer is selected from the group consisting of polyolefin such as polyethylene and polypropylene; polytetrafluoroethylene; polyester; polyether; polyamide such as aramid, polyvinylalcohol, polyacrylonitril; polycarbonate and liquid crystal polymer such as poly(p-phenylene-2,6-benzobisoxazole).

8.  The use according to any one of claims 1-5, wherein the substrate comprises an alignment layer for inducing the ordered morphology and a base layer.

9.  The use according to claim 8, wherein the alignment layer is made of one or more materials chosen from the group consisting of polyimide, polyamide, polyvinyl alcohol and silicon oxide.

10. The use according to claim 8 or 9, wherein the base layer is made of one or more materials chosen from the group consisting of glass, transparent ceramic, fused silica, transparent polymers which may be thermosetting or thermoplastic and (semi)-crystalline or amorphous, such as PC (polycarbonate), PMMA (polymethylmethacrylate), PET (polyethylene terephthalate), PVC (polyvinylchloride), PS (polystyrene), (polycarbonate), COC (cyclic olefin copolymers), PET (polyethylene terephthalate), PES (polyether sulphone), polyamide such as aramid, liquid crystal polymer such as poly (p-phenylene-2, 6-benzobisoxazole) and crosslinked acrylates and epoxies.

11. An optical strain sensor comprising an arrangement of a substrate and a liquid crystal layer provided on the substrate, wherein the liquid crystal layer comprises liquid crystalline molecules having an ordered morphology and wherein the optical properties of the liquid crystal layer change by the strain of the substrate.

12. The sensor according to claim 11, wherein the sensor further comprises an attachment element provided on the arrangement.

13. A process for making an optical strain sensor, comprising the steps of: I) providing an arrangement of a substrate and a liquid crystal layer provided on the substrate, wherein the liquid crystal layer comprises liquid crystalline molecules having an ordered morphology and wherein the optical properties of the liquid crystal layer change by the strain of the substrate sensing element and II) arranging the arrangement of step I) into the optical strain sensor, wherein step I) comprises:

   A) providing a substrate onto which a solution of a polymerizable liquid crystal composition is applied and
   B) curing the polymerizable liquid crystal composition,

   wherein step A) involves

   A1) providing the substrate and coating the solution onto the substrate or
   A2) co-extrusion of the substrate and the solution.

14. The process according to claim 13, wherein the polymerizable liquid crystal composition comprises (I) a polymerizable mesogenic compound and (II) a chiral dopant.

Figure 1

Figure 2(a)

Figure 2(b)

EP 2 623 927 A1

| | Europäisches Patentamt European Patent Office Office européen des brevets | **EUROPEAN SEARCH REPORT** | Application Number EP 12 15 3722 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/92843 A2 (UNIV BROWN RES FOUND [US]; REVEO INC [US]) 6 December 2001 (2001-12-06) * the whole document * | 1-14 | INV. G01B11/16 C09K19/00 |
| X | CAIRNS DARRAN R ET AL: "Optical strain characteristics of holographically formed polymer-dispersed liquid crystal films", APPLIED PHYSICS LETTERS, AIP, AMERICAN INSTITUTE OF PHYSICS, MELVILLE, NY, US, vol. 77, no. 17, 23 October 2000 (2000-10-23), pages 2677-2679, XP012026438, ISSN: 0003-6951, DOI: 10.1063/1.1319510 * the whole document * | 1-14 | |
| X | US 3 872 050 A (BENTON WILLIAM J ET AL) 18 March 1975 (1975-03-18) * column 2, line 53 - column 6, line 43 * * EXAMPLE III, EXAMPLE VII * * abstract; figures 1,2 * | 1-14 | |

TECHNICAL FIELDS SEARCHED (IPC)

G01B
C09K

The present search report has been drawn up for all claims

| Place of search | Date of completion of the search | Examiner |
|---|---|---|
| Munich | 28 March 2012 | Passier, Martinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 15 3722

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2012

| Patent document cited in search report | | Publication date | Patent family member(s) | | Publication date |
|---|---|---|---|---|---|
| WO 0192843 | A2 | 06-12-2001 | AU | 6514601 A | 11-12-2001 |
| | | | TW | 559656 B | 01-11-2003 |
| | | | US | 6778236 B1 | 17-08-2004 |
| | | | US | 2005087021 A1 | 28-04-2005 |
| | | | WO | 0192843 A2 | 06-12-2001 |
| US 3872050 | A | 18-03-1975 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010084010 A1
- WO 04025337 A
- US 7771801 B
- WO 9800428 A
- GB 2328207 A
- WO 0294805 A
- WO 0234739 A
- WO 0206265 A
- WO 0206196 A
- WO 0206195 A
- EP 0617111 A1

**Non-patent literature cited in the description**

- **FINKELMANN et al.** *Advanced Materials,* 2001, vol. 13 (14), 1069-1072
- *Licristal(R) Liquid Crystal Mixtures for Electro-Optic Displays,* May 2002